Europäisches Patentamt

European Patent Office

Office européen des brevets

(19)

(11) Numéro de publication : **0 279 723 B1**

## (12) FASCICULE DE BREVET EUROPEEN

(45) Date de publication du fascicule du brevet :
21.08.91 Bulletin 91/34

(51) Int. Cl.⁵ : **B29C 39/32**

(21) Numéro de dépôt : 88400187.6

(22) Date de dépôt : 28.01.88

(54) **Jonc pour la fabrication de plaques polymères par coulée.**

(30) Priorité : 29.01.87 FR 8701049

(43) Date de publication de la demande :
24.08.88 Bulletin 88/34

(45) Mention de la délivrance du brevet :
21.08.91 Bulletin 91/34

(84) Etats contractants désignés :
AT BE CH DE ES FR GB GR IT LI LU NL SE

(56) Documents cités :
DD-A- 206 049
DE-B- 1 218 137
FR-A- 2 414 057
US-A- 2 328 525

(56) Documents cités :
JAPANESE PATENTS GAZETTE, semaine 44,
no. 78-78810A, 1978, Derwent Publications Ltd,
Londres, GB; & JP-A-53 109 556 (ASAHI CHE-
MICAL IND K.K.) 25-09-1978
JAPANESE PATENTS REPORT, semaine 3, no.
82 05164E, 1982, Derwent Publications Ltd,
Londres, GB; & JP-B-81 053 509 (NIPPON
SHEET GLASS K.K.) 19-12-1981

(73) Titulaire : ATOCHEM
4 & 8, Cours Michelet La Défense 10
F-92800 Puteaux (FR)

(72) Inventeur : Leca, Jean Paul
224, Bd du Maréchal Juin
F-78200 Mantes la Jolie (FR)
Inventeur : Barbin, Jean Yves
1, Les Massins Hebecourt
F-27150 Etrepagny (FR)

(74) Mandataire : Rochet, Michel et al
ATOCHEM Département Propriété Industrielle
La Défense 10 Cédex 42
F-92091 Paris La Défense (FR)

## Description

La présente invention se rapporte à un jonc utile pour la fabrication, par coulée, de plaques ou feuilles de polymères tels que notamment des polymères acryliques suivant le préambule de la revendication 1. Plus particulièrement, la présente invention se rapporte à un jonc constituant l'élément assurant l'étanchéité entre les deux plaques entre lesquelles est coulé le sirop de prépolymère de méthacrylate de méthyle ou le monomère pur, en vue respectivement d'achever ou de réaliser la polymérisation par l'élévation de la température, conduisant à l'obtention de feuilles coulées de poly(méthacrylate de méthyle). Ces feuilles coulées constituent, par exemple, des plaques transparentes colorées qui trouvent une large utilisation pratique, notamment dans la réalisation d'enseignes publicitaires.

Pour fabriquer des feuilles de poly(méthacrylate de méthyle), on commence généralement par réaliser un sirop de prépolymère de méthacrylate de méthyle, dans un réacteur agité, régulé en température, jusqu'à obtention de 5-10% de conversion. Après avoir effectué le dégazage du sirop dans le but d'empêcher la formation de bulles d'air dans les feuilles coulées résultantes, on introduit ce sirop dans des moules constitués par deux plaques de verre planes, espacées par un jonc périphérique, les plaques étant maintenues par des pinces de fermeture du moule. Une fois le jonc positionné mécaniquement entre les plaques ; les pinces sont disposées sur trois côtés ; le sirop est introduit par un tuyau par le quatrième côté du moule ; après remplissage, les pinces manquantes sont mises en place, l'air est chassé du moule et on place celui-ci dans une étuve pour achever la polymérisation.

Au cours du cycle de polymérisation du méthacrylate de méthyle, le moule subit des variations de volume, qui sont les conséquences des variations de la masse volumique du mélange réactionnel avec la température et le degré de polymérisation. De telles variations de volume sont supportées partiellement par le jonc.

Le tableau ci-après indique, pour les différentes étapes de la polymérisation, la densité du mélange à polymériser et, compte tenu de certaines hypothèses de travail, l'épaisseur du jonc qui en résulte, l'épaisseur en début de polymérisation étant notée comme étant de 1.

T A B L E A U

| Etape du cycle de polymérisation | (1) MAM* à 20°C | (2) MAM à 60°C (température de polymérisation) | (3) PMMA** à 60°C (le MAM a polymérisé presque entièrement) | (4) PMMA à 110°C (post-polymérisation) | (5) PMMA à 20°C (avant démoulage) |
|---|---|---|---|---|---|
| Densité du mélange réactionnel | 0,952 | 0,910 | 1,165 | 1,15 | 1,18 |
| Hypothèse de calcul | L'épaisseur du jonc ci-dessous tient compte de l'écrasement imposé par les pinces de fermeture du moule | La variation de volume est réalisée par une variation d'épaisseur | La contraction de volume est supposée induira une contraction de surface de 3% environ et de 97% d'épaisseur | La dilatation est supposée s'effectuer uniformément dans les 3 dimensions | La contraction est supposée s'effectuer uniformément dans les 3 dimensions |
| Epaisseur du jonc entre les 2 plaques | 1 | 1,046 | 0,85 | 0,85 | 0,85 |

\* MAM = Méthacrylate de méthyle
\*\* PMMA = Poly(méthacrylate de méthyle)

Pour que le jonc puisse assurer l'étanchéité du moule lors de la montée à 60°C, il faut qu'il ait été mis préalablement sous contrainte et que son écrasement élastique soit suffisant pour pouvoir se relâcher de 1 à 1,046.

Le diamètre nominal du jonc, pour une épaisseur finale de plaque de 0,85, doit donc être de 1,046. En réalité, un tel diamètre doit être supérieur à cette valeur pour tenir compte des paramètres suivants ; variation de l'épaisseur du jonc ; fluage partiel du jonc ; diminution des forces élastiques qui assurent l'étanchéité du moule lors de la montée en température à 60°C ; variation du volume de remplissage et variation du positionnement du jonc. Pour tenir compte de ces paramètres, on a calculé que le diamètre du jonc doit être supérieur ou égal à 1,09 ce qui donne un « coefficient de calage » de 1,09/0,85, soit 1,28.

Dans la pratique, on détermine expérimentalement les coefficients de calage pour chaque épaisseur de feuille, les valeurs retenues étant celles qui donnent des feuilles naturellement exemptes de défauts, mais surtout le profil d'épaisseur le plus uniforme ; ce coefficient est également calculé en tenant compte de la force de fermeture des pinces. Il faut également tenir compte de cette force de fermeture dans le choix de la dureté du matériau constituant le jonc.

Les joncs en poly(chlorure de vinyle) plastifié répondent bien à l'ensemble des exigences posées : assurer l'étanchéité du moule, présenter un diamètre réglable, une dureté réglabe, la souplesse, la soudabilité, ainsi qu'une facilité de mise en oeuvre. FR-A-2414057, sur lequel le préambule de la revendication 1 est basé, décrit l'utilisation d'un jonc en matière plastique, tel que le poly(chlorure de vinyle) platifié.

Toutefois, de tels joncs présentent l'inconvénient de se laisser gonfler par le méthacrylate de méthyle. Il en résulte qu'après le démoulage, le jonc reste solidaire de la feuille de poly(méthacrylate de méthyle) et que le découpage des bordures de la feuille résultante (ou détourage) conduit à des chutes de détourage ne pouvant être récupérées du fait de l'adhésion physico-chimique du jonc au poly(méthacrylate de méthyle), et du fait que le craquage thermique de ces chutes produirait du chlore qui poserait de graves problèmes pour l'installation et l'environnement.

Les mêmes difficultées se présentent lorsque les plaques sont constituées d'un matériau comprenant du méthacrylate de méthyle à titre principal et au moins un autre monomère polymérisable simultanément. Ceci est notamment le cas de plaques constituées de réseaux interpénétrés de poly(méthacrylate de méthyle) et d'un autre polymère tel que polyuréthane ou polydiméthylsiloxane.

US-A-2328525 décrit un procédé de fabrication de feuilles de poly(méthacrylate de méthyle) par coulée, dans lequel on réalise une cellule à partier de deux feuilles de matière rigide, telle que le verre, espacées l'une de l'autre par des expaceurs périphériques rigides entourés de bandes de matière flexible imperméable, les espaceurs étant retirés lorsque la polyméerisation a été conduite jusqu'à l'obtention d'une masse épaisse visqueuse ou ayant la consistance d'un gel. La présente invention vis, en revanche, à proposer un jonc restant en place pendant toute la polymérisation.

La présente invention apporte une solution aux problèmes sus-indiqués en proposant des joncs détachables après polymérisation, permettant alors de régénérer toutes les chutes de polymère.

La présente invention a donc d'abord pour object un jonc pour la fabrication par coulée de plaques de poly(méthacrylate de méthyle) ou de polymères comportant majoritairement des motifs issus du méthacrylate de méthyle, ledit jonc étant destiné à séparer de façon étanche deux plaques disposées parallèlement entre elles pour constituer avec elles un moule de coulée, et étant réalisé en poly(chlorure de vinyle) plastifié, caractérisé par le fait qu'il est gainé d'une fine couche d'un polymère thermoplastique essentiellement cristallin, capable de conserver son élasticité à des températures comprises entre 20 et 120°C, présentant un point de fusion ou de ramollissement supérieur à 115°C, et choisi parmi :

— les homopolymères isotactiques obtenus par homopolymérisation du propylène en présence de catalyseurs du type Ziegler ;

— les copolymères contenant au moins environ 90% en moles de motifs dérivés du propylène et au plus environ 10% en moles de motifs dérivés de l'éthylène et/ou d'au moins une alpha-oléfine ayant entre 4 et 12 atomes de carbone ; et

— les polyesters saturés.

De préférence, le jonc selon la présente invention est obtenu par coextrusion de l'âme en poly(chlorure de vinyle) plastifié et de la gaine extérieure en polymère thermoplastique.

Quant au polyester saturé pouvant constituer la gaine extérieure du jonc, il est choisi notamment parmi les poly(éthylène téréphtalates) (PETP) et les poly(butylène téréphtalates) (PBTP). Il est important que le polymère thermoplastique constituant la gaine (polymère de propylène ou polyester saturé) soit un polymère essentiellement cristallin et non pas un polymère de nature élastomérique.

Le poly(chlorure de vinyle) plastifié formant l'âme du jonc est obtenu par incorporation dans le poly(chlorure de vinyle) d'au moins un plastifiant, et, le cas échéant, d'au moins un additif usuel choisi parmi les stabilisants et les lubrifiants, le (ou les) plastifiant(s) représentant en général de 15 à 60% environ en poids du mélange total.

Conformément à d'autres caractéristiques importantes du jonc selon l'invention, celui présente une épaisseur nominale comprise notamment entre 1 et 40 mm, pour une épaisseur finale de la feuille de poly(méthacrylate de méthyle) comprise notamment entre 0,8 et 33 mm ; la gaine extérieure présente une épaisseur comprise notamment entre 0,1 et 1 mm ; et le jonc présente une dureté Shore A comprise notamment entre 60 et 100 environ.

Le jonc selon l'Invention présente, de façon classique, une section droite circulaire ou ellipsoïdale ou bien se compose d'un corps de section droite rectangulaire se prolongeant sur l'un de ses côtés par une languette disposée d'équerre et destinée à assurer l'appui dudit jonc sr la plaque inférieure du moule.

Conformément à une caractéristique particulièrement intéressante de la présente invention, le jonc qui en fait l'objet comporte, le long d'une génératrice, des perforations espacées les unes des autres, et pratiquées; dans l'épaisseur de la gaine extérieure, de façon à constituer des points d'accrochage dudit jonc sur la feuille de poly(méthacrylate de méthyle), une fois la polymérisation terminée. Lesdites perforations peuvent être pratiquées avec ou sans enlèvement de matière, par exemple au moyen d'un foret.

Le jonc ainsi constitué est assemblé de manière à former une couronne de la longueur du périmètre de la plaque fabriquée.

Cet assemblage peut se faire de deux façons, ou bien par soudure au miroir, ou bien, de façon plus commode. par l'utilisation de manchons rétractables à l'air chaud, du type de ceux utilisés pour protéger les raccords de fils électriques, en une matière compatible avec les autres matières mises en jeu, par exemple le poly(chlorure de vinyle) ou le polyéthylène.

Dans ces conditions, lors de la polymérisation, le poly(méthacrylate de méthyle) s'introduit dans ces perforations du jonc, de sorte qu'au démoulage, celui-ci reste accroché sur la bordure de la feuille, laquelle peut être manipulée ensuite beaucoup plus facilement que si le jonc s'était détaché directement de celle-ci. En effet, de telles feuilles présentent des bords coupants, ce qui suppose d'avoir à les manipuler avec des précautions particulières.

La présente invention a également pour objet l'utilisation du jonc tel que défini ci-dessus pour la fabrication par coulée de plaques de poly(méthacrylate de méthyle) ou de polymères comportant majoritairement des motifs issus du méthacrylate de méthyle.

Pour mieux faire comprendre l'objet de la présente invention, on en décrira ci-après un mode particulier de mise en oeuvre.

## Exemple

On réalise la formulation de poly(chlorure de vinyle) suivante :

| | | |
|---|---|---|
| Poly(chlorure de vinyle) ............ | 100 parties en poids | |
| Phtalate de dioctyle (plastifiant) .. | 48 " " " | |
| Lubrifiants ........................ | 6 " " " | |
| Stabilisant ........................ | 0,3 " " " | |

On a coextrudé la formulation précitée et du polypropylène pour obtenir un jonc de poly(chlorure de vinyle) gainé de polypropylène, d'un diamètre d'ensemble de 11 mm, l'épaisseur de la gaine étant de 0,2 mm. Ce jonc présente une dureté Shore A égale à 85. On a réalisé, suivant une génératrice dudit jonc, une succession de perforations cruciformes d'environ 2 mm de longueur, pratiquées sur toute l'épaisseur de la gaine et étant espacées de 10 cm environ.

On a ensuite fabriqué une feuille de poly(méthacrylate de méthyle) de 3 m × 2 m × 8 mm : dans un moule constitué de deux plaques de verre parallèles séparées par ledit jonc qu'on a disposé de façon que les perforations se situent dans le plan moyen du moule, vers l'intérieur de celui-ci, on a coulé un sirop de prépolymère de méthacrylate de méthyle qui contient un peroxyde de benzoyle comme amorceur de polymérisation. La polymérisation de la feuille est réalisée dans une étuve ventilée et chauffée à une température de 50°C pendant environ 18 heures et 1 heure 30 à 113°C. Ensuite, on a retiré la moule de l'étuve et démoulé la feuille de poly(méthacrylate de méthyle) de laquelle le jonc est resté solidaire par les points d'accrochage constitués par le polymère formé dans les perforations précitées.

On a pu alors arracher aisément le jonc pour pouvoir découper, comme souhaité, la feuille de poly(méthacrylate de méthyle) (PMMA) obtenue, exempte de tout résidu de jonc. Il était également possible de manipuler sans risque la feuille de PMMA obtenue sans retirer immédiatement le jonc.

4

## Revendications

1. Jonc pour la fabrication par coulée de plaques de poly(méthacrylate de méthyle) ou de polymères comportant majoritairement des motifs issus du méthacrylate de méthyle, ledit jonc étant destiné à séparer de façon étanche deux plaques disposées parallèlement entre elles pour constituer avec elles un moule de coulée, et étant réalisé en poly(chlorure de vinyle) plastifié, caractérisé par le fait qu'il est gainé d'une fine couche d'un polymère thermoplastique essentiellement cristallin, capable de conserver son élasticité à des températures comprises entre 20 et 120°C, présentant un point de fusion ou de ramollissement supérieur à 115°C, et choisi parmi :

— les homopolymères isotactiques obtenus par homopolymérisation du propylène en présence de catalyseurs du type Ziegler ;
— les copolymères contenant au moins environ 90% en moles de motifs dérivés du propylène et au plus environ 10% en moles de motifs dérivés de l'éthylène et/ou d'au moins une alpha-oléfine ayant entre 4 et 12 atomes de carbone ; et
— les polyesters saturés.

2. Jonc selon la revendication 1, caractérisé par le fait qu'il est obtenu par coextrusion de l'âme en poly(chlorure de vinyle) plastifié et de la gaine extérieure en polymère thermoplastique.

3. Jonc selon l'une des revendications 1 et 2, caractérisé par le fait que le polyester constitutif de la gaine extérieure est choisi parmi les poly(éthylène téréphtalates) et les poly(butylène téréphtalates).

4. Jonc selon l'une des revendications 1 à 3, caractérisé par le fait que le poly(chlorure de vinyle) plastifié est obtenu par incorporation dans le poly (chlorure de vinyle) d'au moins un plastifiant, et, le cas échéant, d'au moins un additif usuel choisi parmi les stabilisants et les lubrifiants, le (ou les) plastifiant(s) représentant 15 à 60% en poids du mélange total.

5. Jonc selon l'une des revendications 1 à 4, caractérisé par le fait qu'il présente une épaisseur nominale comprise entre 1 et 40 mm.

6. Jonc selon l'une des revendications 1 à 5, caractérisé par le fait que la gaine extérieure présente une épaisseur comprise entre 0,1 et 1 mm.

7. Jonc selon l'une des revendications 1 à 6, caractérisé par le fait qu'il présente une dureté Shore A comprise entre 60 et 100.

8. Jonc selon l'une des revendications 1 à 7, caractérisé par le fait qu'il présente une section droite circulaire ou ellipsoïdale ou bien se compose d'un corps de section droite rectangulaire se prolongeant sur l'un de ses côtés par une languette disposée d'équerre et destinée à assurer l'appui dudit jonc sur la plaque inférieure du moule.

9. Jonc selon l'une des revendications 1 à 8, caractérisé par le fait qu'il comporte, le long d'une génératrice, des perforations espacées les unes des autres et pratiquées dans l'épaisseur de la gaine extérieure, de façon à constituer des points d'accrochage dudit jonc sur la feuille de poly(méthacrylate de méthyle), une fois la polymérisation terminée.

10. Utilisation du jonc tel que défini à l'une des revendications 1 à 9 pour la fabrication par coulée de plaques de poly(méthacrylate de méthyle) ou de polymères comportant majoritairement des motifs issus du méthacrylate de méthyle.

## Patentansprüche

1. Stab zur Gießherstellung von Tafeln aus Polymethylmethacrylat oder aus Polymeren, die überwiegend vom Methylmethacrylat abgeleitete Reste enthalten, wobei der Stab zur undurchlässigen Trennung zweier gegeneinander parallel angeordneter Platten dient, mit ihnen eine Gießform bildet und aus weichgemachtem Polyvinylchlorid besteht, dadurch gekennzeichnet, daß er mit einer dünnen Schicht aus einem im wesentlichen kristallinen, thermoplastischen Polymeren überzogen ist, seine Elastizität bei Temperaturen zwischen 20 und 120°C beibehält, einen Schmelz- oder Erweichungspunkt von mehr als 115°C aufweist und aus

— durch Homopolymerisation von Propylen in Gegenwart von Ziegler-Katalysatoren erhaltenen isotaktischen Homopolymeren,
— Copolymeren, die wenigstens etwa 90 Mol% von Propylen abgeleitete Reste und höchstens etwa 10 Mol% von Ethylen und/oder wenigstens einem zwischen 4 und 12 Kohlenstoffatome enthaltenden alpha-Olefin abgeleitete Reste enthalten, und
— gesättigten Polyestern ausgewählt ist.

2. Stab nach Anspruch 1, dadurch gekennzeichnet, daß er durch Coextrusion des Kerns aus weichgemachtem Polyvinylchlorid und der Oberfläche aus thermoplastischem Polymeren hergestellt wird.

3. Stab nach Anspruch 1 oder 2, dadurch ge. nzeichnet, daß der die Oberflächenbeschichtung bildende Polyester aus Polyethylen- und Polybutylentereph. .alaten ausgewählt ist.

4. Stab nach einem der Ansprüche 1 bis 3, dadurch gekennzeichnet, daß das weichgemachte Polyvinylchlorid durch Einbringen von wenigstens einem Weichmacher und gegebenenfalls wenigstens einem aus Stabilisatoren und Schmiermitteln ausgewählten üblichen Additiv in das Polyvinylchlorid hergestellt wird, wobei der oder die Weichmacher 15 bis 60 Gew.% des Gesamtgemischs ausmachen.

5. Stab nach einem der Ansprüche 1 bis 4, dadurch gekennzeichnet, daß er eine Nenndicke zwischen 1 und 40 mm aufweist.

6. Stab nach einem der Ansprüche 1 bis 5, dadurch gekennzeichnet, daß die Oberflächenbeschichtung eine Dicke zwischen 0,1 und 1 mm aufweist.

7. Stab nach einem der Ansprüche 1 bis 6, dadurch gekennzeichnet, daß er eine Shore-A-Härte zwischen 60 und 100 besitzt.

8. Stab nach einem der Ansprüche 1 bis 7, dadurch gekennzeichnet, daß er einen kreisförmigen oder ellipsoiden Querschnitt aufweist oder auch aus einem Körper mit rechteckigem Querschnitt besteht, der sich auf einer seiner Seiten zu einem rechtwinklig angeordneten Vorsprung verlängert, der zur Sicherung der Stabauflage auf der unteren Formplatte dient.

9. Stab nach einem der Ansprüche 1 bis 8, dadurch gekennzeichnet, daß er entlang einer Erzeugenden voneinander getrennte Perforationen enthält, die derart in der Oberflächenschicht angeordnet sind, daß sie für den Stab auf der Polymethylmethacrylattafel Befestigungspunkte bilden, wenn die Polymerisation beendet ist.

10. Verwendung des in einem der Ansprüche 1 bis 9 definierten Stabes zur Gießherstellung von Tafeln aus Polymethylmethacrylat oder Polymeren, die überwiegend vom Methylmethacrylat abgeleitete Reste enthalten.

## Claims

1. Strand for producing, by casting, panels of poly(methyl methacrylate) or of polymers predominantly comprising units resulting from methyl methacrylate, the said strand being intended sealingly to separate two panels arranged parallel to one another in order to form, with said panels, a casting mould, and being made of plasticised poly(vinyl chloride), characterised in that it is sheathed by a thin layer of an essentially crystal-line thermoplastic polymer, capable of retaining its elasticity at temperatures of between 20 and 120°C, having a melting or softening point higher than 115°C and chosen from :
— isotactic homopolymers obtained by homopolymerisation of propylene in the presence of Ziegler-type catalysts ;
— copolymers containing at least approximately 90 mol% of units derived from propylene and at moat approximately 10 mol% of units derived from ethylene and/or at least one alpha-olefin having between 4 and 12 carbon atoms ; and
— saturated polyesters.

2. Strand according to Claim 1, characterised in that it is obtained by coextrusion of the core of plasticised poly(vinyl chloride) and the outer sheath of thermoplastic polymer.

3. Strand according to one of Claims 1 and 2, characterised in that the polyester constituting the outer sheath is selected from poly(ethylene terephthalates) and poly(butylene terephthalates).

4. Strand according to one of Claims 1 to 3, characterised in that the plasticised poly(vinyl chloride) is obtained by incorporation in the poly(vinyl chloride) of at least one plasticiser, and, if necessary, at least one common additive selected from stabilisers and lubricants, the plasticiser(s) representing 15 to 60% by weight of the total mixture.

5. Strand according to one of Claims 1 to 4, characterised in that it has a nominal thickness of between 1 and 40 mm.

6. Strand according to one of Claims 1 to 5, characterised in that the outer sheath has a thickness of between 0.1 and 1 mm.

7. Strand according to one of Claims 1 to 6, characterised in that it has a Shore A hardness of between 60 and 100.

8. Strand according to one of Claims 1 to 7, characterised in that it has a circular or ellipsoidal cross-section, or consists of a body of rectangular cross-section, extended on one side by a small flap arranged at right angles and intended to ensure that the said strand bears on the lower panel of the mould.

9. Strand according to one of Claims 1 to 8, characterised in that it carries, along one generatrix, perforations which are spaced apart and made in the thickness of the outer sheath, so as to form anchorage points for the said strand on the poly(methyl methacrylate) sheet, once polymerisation is complete.

10. Use of the strand as defined in one of Claims 1 to 9 for producing, by casting, panels of poly(methyl methylacrylate) or of polymers predominantly comprising units resulting from methyl methacrylate.